# EUROPÄISCHE PATENTSCHRIFT

(11) **EP 1 611 039 B1**
(45) Veröffentlichungstag und Bekanntmachung des Hinweises auf die Patenterteilung: **17.10.2007**
(21) Anmeldenummer: 04705352.5
(22) Anmeldetag: 27.01.2004
(51) Int. Cl.: B65G 59/02, B65G 59/04

(54) **TRANSPORTEINRICHTUNG, INSBESONDERE FÜR PLATTENFÖRMIGE WERKSTÜCKE**
TRANSPORT DEVICE, IN PARTICULAR FOR PANEL-TYPE WORKPIECES
DISPOSITIF DE TRANSPORT, NOTAMMENT POUR DES PIECES A USINER EN FORME DE PLAQUES

(30) Priorität: 27.01.2003 AT 1062003
(43) Veröffentlichungstag der Anmeldung: 04.01.2006
(73) Patentinhaber: Durst Phototechnik Digital Technology GmbH, 9900 Lienz (AT)
(72) Erfinder: KAUFMANN, Hubert, Anton, 6881 Mellau (AT); WEINGARTNER, Peter, 9991 Dölsach (AT)
(74) Vertreter: Secklehner, Günter
(86) Internationale Anmeldenummer: PCT/AT2004/000028
(87) Internationale Veröffentlichungsnummer: WO 2004/067423

(56) Entgegenhaltungen:
- DE-B- 1 263 610
- US-A- 3 780 884
- US-A- 4 753 564

## Beschreibung

Die Erfindung bezieht sich auf eine Transporteinrichtung, insbesondere für plattenförmige Werkstücke, wie in den Oberbegriffen der Ansprüche 1 und 19 beschrieben.

Mit einer derartigen Transporteinrichtung können die Werkstücke, beispielsweise Platten, einzeln von einem Stapel abgehoben und einer Bearbeitungsstelle zugeführt werden.

Aufgabe der Erfindung ist es, eine platzsparende Vorrichtung dieser Art zu schaffen.

Die erfindungsgemäße Aufgabe wird dadurch gelöst, dass eine Fördervorrichtung zwischen einer Ruhelage außerhalb eines Hubbereiches der Platte und einer Arbeitslage zwischen der angehobenen Platte und dem Plattenstapel verstellbar angeordnet ist, um den Transportweg für die Hebevorrichtung freizugeben.

Vorteilhaft besteht die Förderbahn der Transporteinrichtung aus zwei um eine gemeinsame Achse kippbaren bzw. verschwenkbaren Teilbahnen. Zum Zusammenklappen der Förderbahn ist hierbei günstigerweise die erste Teilbahn mit ihrem von der zweiten Teilbahn abgelegenen Seitenrand unter Anhebung der gemeinsamen Achse in Richtung zum von der ersten Teilbahn abgelegenen Seitenrand der zweiten Teilbahn hin verfahrbar.

Vorteilhafterweise kann weiters vorgesehen sein, dass die Förderbahn nicht nur zusammenklappbar ist, sondern auch in ihrer ausgestreckten Stellung quer zur Förderrichtung verfahrbar ist, vorzugsweise über eine Wegstrecke von mindestens 100 mm. Hierdurch kann eine einfache Ausrichtung eines auf der Förderbahn abgelegten Werkstückes an einem quer zur Förderrichtung der Förderbahn ausgerichteten Anschlag ermöglicht werden.

Mit der erfindungsgemäßen Vorrichtung können auch sehr dünne und/oder großflächige Platten beispielsweise aus Papier, Holz, Kunststoff oder einem Steinmaterial, von einem Palettenstapel abgehoben und einer Bearbeitungsstation, beispielsweise einer Einrichtung zum Bedrucken, zugeführt werden.

Vorteilhaft ist aber auch, wenn die Fördervorrichtung zwei in Förderrichtung parallel verlaufende Fördermittel aufweist, weil dadurch eine platzsparende Anordnung für die aus dem Hubbereich der Platte in Ruhelage verstellte Fördervorrichtung erreicht wird.

Möglich ist dabei, wenn die Fördermittel durch zumindest einen Bandförderer oder Riemenförderer gebildet sind, weil dadurch eine satte, verformungsfreie Auflage für die Platte erreicht wird.

Dadurch, dass jedes der Fördermittel einen Antrieb aufweist, werden Antriebskupplungselemente eingespart.

Bei einer Ausbildung, wonach die Fördervorrichtung in einer zur Förderrichtung senkrecht verlaufenden Führungsanordnung verstellbar ist, wird der Zugang zur Fertigungseinrichtung für etwaige Wartungsarbeiten erleichtert.

Es ist aber auch möglich, die Fördervorrichtung in einer zur Förderrichtung parallel verlaufenden Führungsanordnung zu verstellen, wodurch ein linearer Transportweg für die Platte erreicht wird.

Bei einer Ausbildung, wonach die Führungsanordnung durch parallel verlaufende, im Maschinengestell angeordnete Führungsschienen gebildet ist, die in zur Förderrichtung senkrecht verlaufenden Ebenen oder parallel verlaufenden Ebenen Führungsbahnen ausbilden, wird ein exaktes, verkantungsfreies Verstellen der Fördervorrichtung erreicht.

Vorteilhaft ist weiters, wenn eine durch das Fördermittel gebildete Auflagefläche für die Platte in Ruhelage in eine zur Aufstandsfläche in etwa senkrechte Lage verstellbar ist, wodurch der Gesamtflächenbedarf für die Vereinzelungs- und Zuführeinrichtung gering gehalten wird.

Durch die geradlinige Ausbildung der Führungsschienen wird ein einfacher konstruktiver Aufbau erreicht.

Durch die gekrümmt, kreisbogenförmig oder teleskopartig ausgebildeten Führungsschienen ist eine den jeweiligen Anforderungen an eine derartige Vereinzelungs- und Zuführeinrichtung anpassbare Ausbildung erreicht.

Eine verstellbare Lagerung der Fördermittel in den Führungsschienen über Rollenlaufwerke gewährleistet eine leichtgängige Verstellbarkeit und damit eine Reduzierung von Antriebsleistung.

Durch einen Verstellantrieb des oder der Fördermittel(s) zur Verstellung zwischen der Arbeitslage und der Ruhelage mit einem durch einen Druckmedium beaufschlagbaren Druckzylinder oder einen elektromotorischen Antrieb wird ein automatisierter Ablauf mit einfachen Mitteln erreicht.

Ein durch einen Linearantrieb, z.B. einen Kettentrieb, Spindeltrieb, Druckzylinder, gebildeter Verstellantrieb ermöglicht den Einsatz technisch bewährter und kostengünstiger Antriebe.

Eine zur Förderrichtung in senkrecht verlaufender Richtung oder parallel verlaufender Richtung geteilte Ausbildung der Fördermittel gewährleistet eine sehr kompakte Garagierung der Fördermittel in der Ruhelage.

Eine schwenkbare Verbindung der Fördermittel in einer Schwenkanordnung in einer Teilungsebene bewirkt eine Einsparung von Verstellantrieben.

Wenn zumindest einem Fördermittel ein einen Begrenzungsanschlag für eine Werkstückkante ausbildendes Anschlagmittel in einer zur Förderrichtung parallel verlaufenden Richtung zugeordnet ist, wird in besonders einfacher Weise durch eine Verstellung des Fördermittels eine Ausrichtung des Werkstückes längs der Werkstückkante zur exakten lagerichtigen Zuführung in die Fertigungseinrichtung erreicht.

Eine besonders einfache Ausbildung wird dadurch erreicht, dass das Anschlagmittel durch eine Führungsschiene gebildet ist.

Möglich ist aber auch, dass an einem Rahmen der Hebevorrichtung und/oder des Fördermittels zumindest eine Stellvorrichtung zur Ausrichtung des Werkstückes am Anschlagmittel angeordnet ist, weil dadurch unabhängig von der Verstellung des Fördermittels eine Ausrichtung des Werkstückes erreicht wird.

Schließlich ist aber auch von Vorteil, wenn die Stellvorrichtung durch zumindest eine angetriebene Förderwalze oder Förderrolle gebildet ist, wodurch eine technisch und wirtschaftlich einfache Ausführung erzielt wird.

Zum besseren Verständnis der Erfindung wird diese anhand der in den Figuren gezeigten Ausführungsbeispielen näher erläutert.

Es zeigen:
- Fig. 1: ein Schaubild der erfindungsgemäßen Transporteinrichtung in einer ersten Arbeitsstellung,
- Fig. 2: den Ausschnitt A der Fig. 1,
- Fig. 3: ein Schaubild der erfindungsgemäßen Transporteinrichtung in einer zweiten Arbeitsstellung,
- Fig. 4: den Ausschnitt A der Fig. 3,
- Fig. 5: ein Schaubild der erfindungsgemäßen Förderbahn,
- Fig. 6: den Ausschnitt A der Fig. 5,
- Fig. 7: den Ausschnitt B der Fig. 5,
- Fig. 8: ein Schaubild der erfindungsgemäßen Transporteinrichtung in einer dritten Arbeitsstellung,
- Fig. 9: eine Seitenansicht der Transporteinrichtung,
- Fig. 10: eine Draufsicht auf die erfindungsgemäße Transporteinrichtung,
- Fig. 11: ein Schaubild eines Teils der erfindungsgemäßen Transporteinrichtung in einer Fig. 1 entsprechenden Arbeitsstellung,
- Fig. 12: den Ausschnitt A der Fig. 11,
- Fig. 13: den Ausschnitt B der Fig. 11,
- Fig. 14: ein weiteres Schaubild der erfindungsgemäßen Transporteinrichtung,
- Fig. 15: eine Seitenansicht der erfindungsgemäßen Transporteinrichtung,
- Fig. 16: eine Draufsicht auf die erfindungsgemäße Transporteinrichtung,
- Fig. 17: eine andere Ausbildung der Vereinzelungs- und Zuführeinrichtung in vereinfachter Darstellung, in Ansicht, teilweise geschnitten,
- Fig. 18: die Vereinzelungs- und Zuführeinrichtung gemäß Fig. 17 in Draufsicht,
- Fig. 19: eine weitere Ausbildung der erfindungsgemäßen Vereinzelungs- und Zuführeinrichtung in Ansicht und vereinfachter Darstellung, teilweise geschnitten,
- Fig. 20: eine andere Ausbildung der Vereinzelungs- und Zuführeinrichtung in vereinfachter Darstellung in Ansicht, teilweise geschnitten und
- Fig. 21: eine weitere Ausbildung der Vereinzelungs- und Zuführeinrichtung in vereinfachter Darstellung in Ansicht, teilweise geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

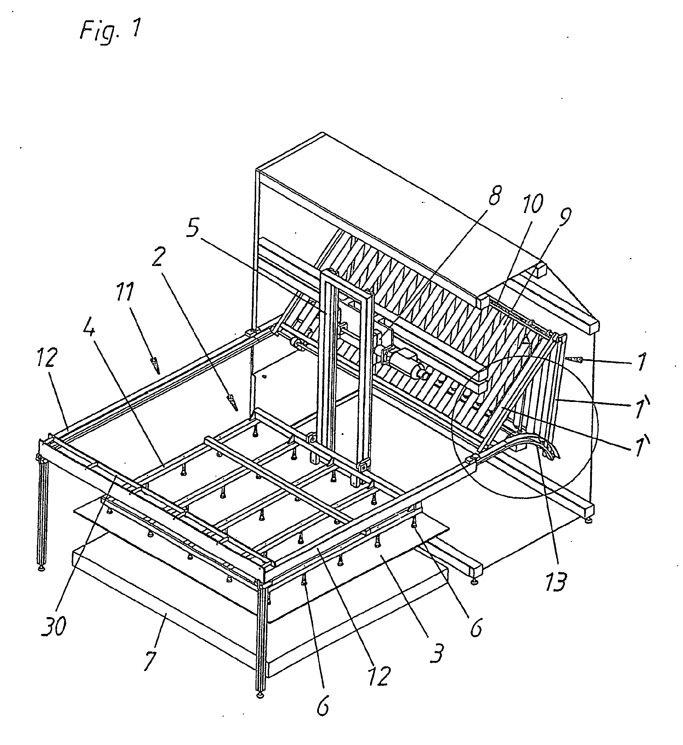

In der Fig. 1 ist die Förderbahn 1 in ihrer hinteren Endstellen gezeigt und die Hebevorrichtung in ihrer unteren Endstellung zur Übernahme einer Platte 3. Die Hebevorrichtung 2 weist einen in der Höhe verfahrbaren Rahmen 4 auf. Der Rahmen 4 ist mit vertikalen Schienen 5 versehen, die in Führungsschuhen bzw. Führungsklötzen 8 in der Höhe verfahrbar gelagert sind. Das vertikale Verfahren des Rahmens 4 kann beispielsweise über einen Seilzug oder einen Zahnradantrieb erfolgen. Am Rahmen 4 sind im gezeigten Ausführungsbeispiel Saugnäpfe 6 gelagert, mittels denen eine Platte 3 von ihrer Unterlage 7, beispielsweise einer Palette, abhebbar ist. Auch mechanische Mittel, z.B. eine Zange, sind denkbar und möglich.

Die Förderbahn 1 besteht aus zwei Teilbahnen 1', die im gezeigten Ausführungsbeispiel als Rollenbahnen mit Rollen 9 ausgeführt sind, aber z.B. auch von Förderbändern gebildet werden könnten. Die beiden Teilbahnen 1' sind um eine gemeinsame Achse 10 schwenkbar und sind in Schienen 11 geführt, die einen geraden Abschnitt 12 und einen gebogenen Abschnitt 13 aufweisen.

Die Teilbahnen 1 weisen Zapfen 14 auf, mittels denen sie in den Schienen 11 geführt sind. Die Zapfen 14 stehen über die senkrecht zur gemeinsamen Achse 10 ausgerichteten Seitenränder der Teilbahnen 1' vor und sind an diesen an diesen Seitenrändern in der Nähe der von der gemeinsamen Achse 10 abgewandten Enden angeordnet. Die Zapfen 14 können zusätzlich mit Rollen versehen sein. Eine der Teilbahnen 1' ist mit zwei Ritzeln 15 versehen, die an Zahnstangenprofilen 6, die neben den Schienen 11 angeordnet sind, und sich über deren geraden Abschnitt 12 erstrecken, ablaufen. Die Ritzel 15 sind konzentrisch zu den Zapfen 14 angeordnet. Der Antrieb der Ritzel 15 erfolgt über eine Antriebswelle 17, einen Riemenantrieb 18 und einen an der einen Teilbahn 1' gelagerten Motor 19.

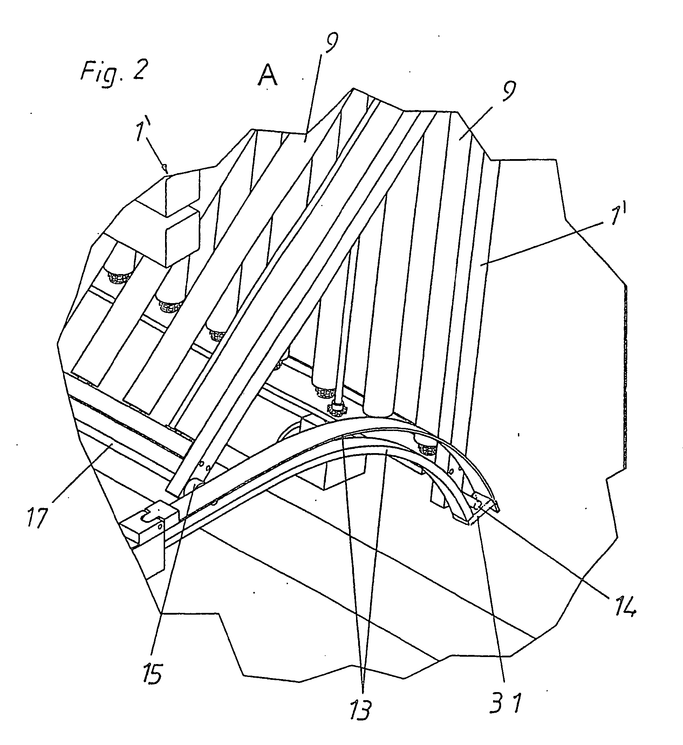

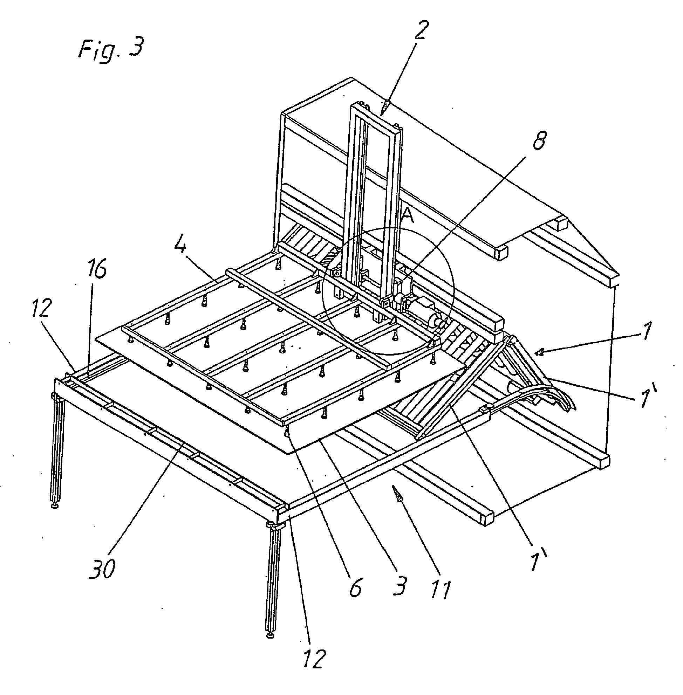

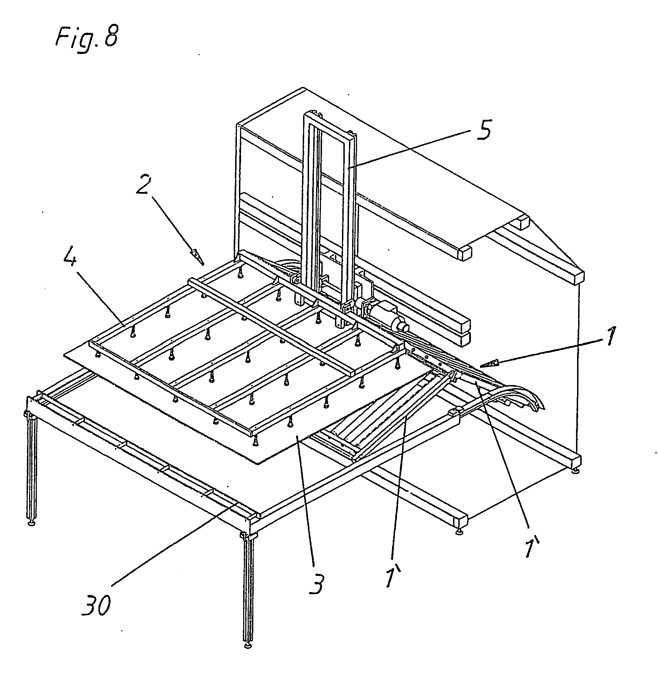

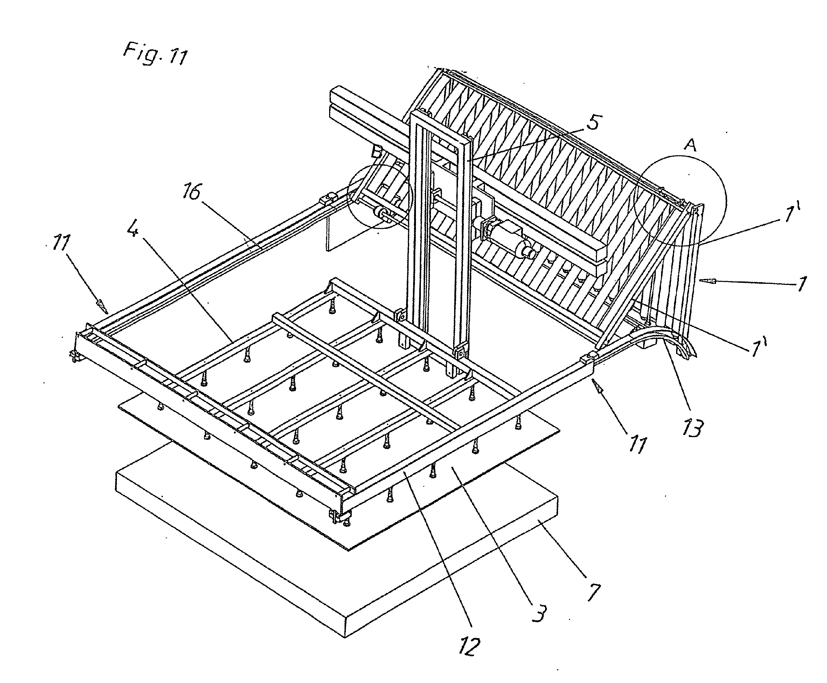

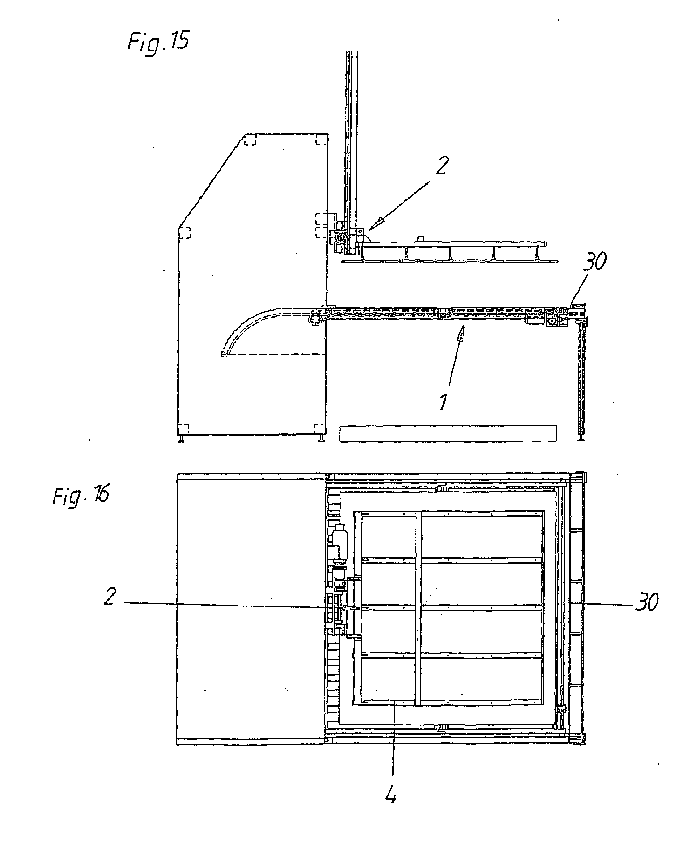

Mittels der vom Motor 19 angetriebenen Ritzel 15 kann die Förderbahn 1 zwischen einer vorderen ausgestreckten Stellung und einer hinteren zusammengeklappten Stellung verfahren werden. Es wird hierbei der von der gemeinsamen Achse 10 abgelegene Seitenrand der einen Teilbahn 1', an welcher die Ritzel 15 angeordnet sind, in Richtung zum von der gemeinsamen Achse 10 abgelegenen Seitenrand der anderen Teilbahn 1' verfahren. Diese andere Teilbahn wird hierbei von der die angetriebenen Ritzel 15 aufweisenden Teilbahn quer zur Förderrichtung der Förderbahn 1 verschoben, ohne dass zunächst eine Anhebung der Achse 10 erfolgt. Die Zapfen 14 der geschobenen, keine angetriebenen Ritzel 15 aufweisenden Teilbahn 1' werden hierbei entlang der Schienen 11 geführt und durchlaufen den Endbereich deren geraden Abschnitte 12 und in der Folge den gebogenen Abschnitt 13, bis sie am Ende des gebogenen Abschnitts 13 an einem Begrenzungsanschlag 31 (Fig. 2) anschlagen. In der weiteren Folge wird die gemeinsame Achse 10 angehoben, wobei sich der Abstand des von der Achse 10 abgelegenen Seitenrands der nicht angetriebenen Teilbahn 1' verringert. Die vordere ausgestreckte Endstellung, in der die beiden Teilbahnen in einer gemeinsamen Ebene liegen, ist in den Fig. 14 bis 16 dargestellt und die hintere zusammengeklappte Endstellung ist aus den Fig. 1, 2 und 11 ersichtlich. Die Fig. 8 und 3 zeigen Zwischenstellungen.

Der Antrieb der Rollen 9 beider Teilbahnen 1' erfolgt über einen Motor 20, der an der anderen Teilbahn 1' gelagert ist. Jede Rolle 9 ist mit einem Zahnrad 21 versehen und der Antrieb der Rollen 9 der Teilbahn 1', an der der Motor 20 gelagert ist, erfolgt über eine Antriebskette 22, einen Zahnriemen od. dgl.

Diese Antriebskette 22 treibt auch eine Antriebswelle 23 an, die ebenfalls mit einem Zahnrad 21 versehen ist, das mit der Antriebskette 22 kämmt. An anderen Ende ist die Antriebswelle 23 mit einem Kegelzahnrad 25 versehen, das mit einem korrespondierenden Kegelzahnrad 26 kämmt. Das Kegelzahnrad 26 ist mit einem weiteren Kegelzahnrad 27 auf einer Hülse 28 gelagert, die auf die gemeinsame Achse 10 aufgeschoben ist, die die beiden Teilbahnen 1' gelenkig verbindet. Dieses weitere Kegelzahnrad 27 kämmt mit einem weiteren Kegelzahnrad 29, das auf einer Antriebswelle 24 für die zweite Teilbahn 1' gelagert ist.

Die Antriebswelle 24 ist an ihrem dem Kegelzahnrad 29 gegenüberliegenden Ende wieder mit einem Zahnrad 21 versehen, das mit einer weiteren Antriebskette 22 kämmt und über diese die Rollen 9 der zweiten Teilbahn 1' antreibt.

Das Zusammenklappen der Teilbahnen 1' wird daher durch den Antrieb der Rollen 9 nicht behindert.

Am Beginn eines Transportvorganges befindet sich die Rollenbahn 1 in der in der Fig. 1 gezeigten hintersten und zusammengeklappten Stellung. Der Rahmen 4 der Hebevorrichtung 2 wird abgesenkt, um mit seinen Saugnäpfen 6 die Platte 3 aufzunehmen.

Anschließend wird der Rahmen 4 mit der angesaugten Platte 3 in seine obere Stellung verfahren und die Förderbahn 1 wird mittels des Motors 19 in die vordere, d.h. ausgestreckte Position gebracht. Ca. 100 mm bevor sich die Förderbahn 1 in ihrer vorderen Endposition befindet, wird die Platte 3 auf dieser abgelegt. Anschließend fährt die Rollenbahn 1 mit der Platte 3 in die vordere Endposition, wobei sie mit ihrem auf der Seite des Anschlages liegenden Seitenrand (das ist der von der gemeinsamen Achse 10 abgelegene Seitenrand) unter diesem Anschlag hindurch quer zur Förderrichtung verfahrbar ist, und die Platte 3 wird am Anschlaglineal 30 ausgerichtet. Anstelle des Anschlaglineals 30 können auch Anschlagrollen vorgesehen sein. Nach erfolgter Ausrichtung wird die Platte 3 mittels der Rollen 9 horizontal verfahren.

Nachdem die Platte 3 die Förderbahn 1 verlassen hat, wird die Förderbahn 1 wieder in ihre hintere Stellung verfahren und somit zusammengeklappt (zusammengefaltet) und der Rahmen 4 wird zur Aufnahme der nächsten Platte 3 abgesenkt.

Eine "zusammengeklappte Stellung" bedeutet hierbei im Rahmen dieser Schrift, dass die beiden Teilbahnen in dieser Stellung nicht in einer gemeinsamen Ebene liegen, also einen Öffnungswinkel von weniger als 180°, vorzugsweise von weniger als 90°, einschließen. Im zusammengeklappten Endzustand müssen diese beiden Teilbahnen aber nicht aneinander anliegen, sondern können noch einen verbleibenden Öffnungswinkel, beispielsweise im Bereich von 30°, miteinander einschließen, so wie dies auch bei dem in den Fig. dargestellten Ausführungsbeispiel der Fall ist.

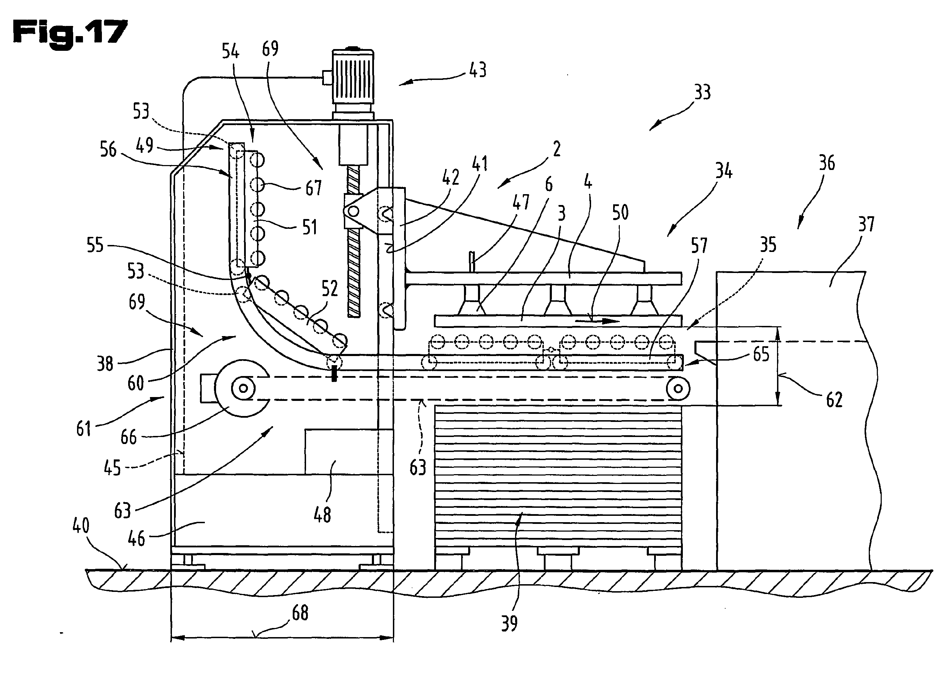

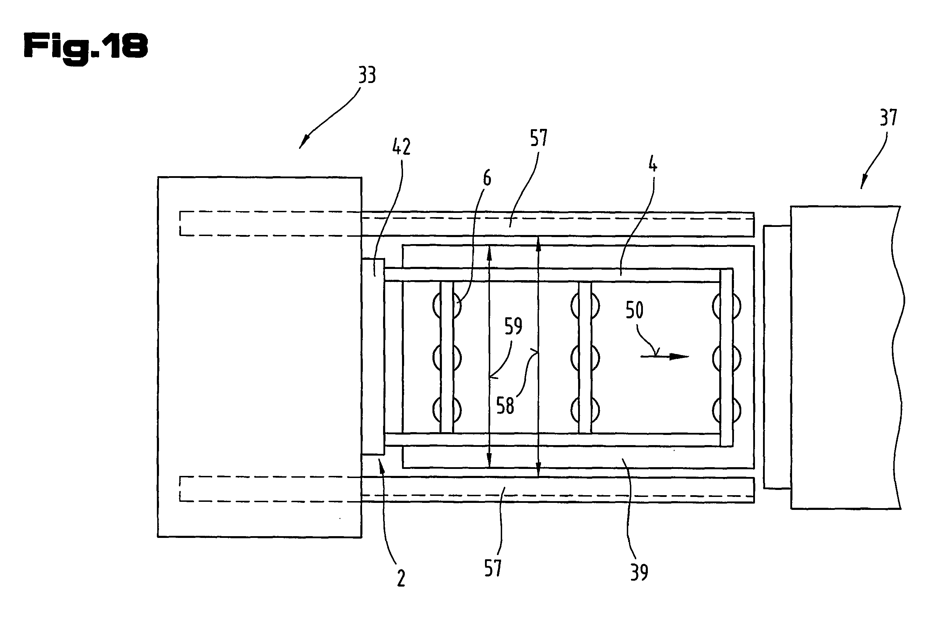

In den Fig. 17 und 18 ist eine andere Ausbildung der Transporteinrichtung, insbesondere einer Vereinzelungs- und Zuführvorrichtung 33 mit einer Vereinzelungsvorrichtung 34 für die Platten 3 und einer Zuführvorrichtung 35 für die Zufuhr der Platten 3 in eine Fertigungsvorrichtung 36, insbesondere eine Druckmaschine 37 gezeigt.

Ein schrankförmiges Maschinengestell 38 ist mit der Hebevorrichtung 2 ausgestattet, bestehend aus den mit den Saugnäpfen 6 zum Aufnehmen der Platte 3 von einem Plattenstapel 39 bestückten Rahmen 4, der an einem in zu einer Aufstandsfläche 40 senkrechter Richtung in Führungsbahnen 41 verstellbaren Hubschlitten 42 befestigt ist. Ein Antrieb 43 des Hubschlittens 42 und damit des Rahmens 4 wird beispielsweise durch einen elektromotorischen Spindeltrieb 44 gebildet der über Leitungen 45 mit einer Steuereinrichtung 46 die im Maschinengestell 38 integriert angeordnet ist, verbunden ist.

Die Saugnäpfe 6 sind über Rohrleitungen 47 mit einer ebenfalls im Maschinengestell angeordneten Pneumatiksteuerung 48 leitungsverbunden und werden über diese zum Abheben der Platte 3 vom Plattenstapel 39 mit Unterdruck beaufschlagt. Zur Beförderung der Platte 3 in die Druckmaschine 37 weist die Vereinzelungs- und Zuführvorrichtung 33 eine Fördervorrichtung 49 auf, die durch zwei quer zu einer Förderrichtung gemäß - Pfeil 50 - geteilte Fördermittel 51, 52, z.B. mit Einzelantriebe 53, ausgestattete Rollenbahnen 54 gebildet sind. Die Fördermittel 51, 52 sind miteinander über eine zur Förderrichtung gemäß - Pfeil 50 - quer verlaufende Schwenkachse 55 miteinander gelenkig verbunden. Über Rollenlaufwerke 56 sind die Fördermittel 51, 52 in aus dem Maschinengestell 38 parallel zur Aufstandsfläche 40 ausragenden Führungsschienen 57 und damit in einer zur Aufstandsfläche 40 parallelen Ebene geführt. Eine parallel zur Aufstandsfläche 40 verlaufende Distanz 58 zwischen den Führungsschienen 57 ist größer als eine Breite 59 der Platte 3.

Im Maschinengestell 38 verlaufen die Führungsschienen 57 über 90 ° - ige Bogenstücke 60 im Wesentlichen senkrecht zur Aufstandsfläche 40 und in von der Aufstandsfläche 40 entgegengesetzter Richtung.

Ein Verstellantrieb 61 zum Verstellen der Fördermittel 51, 52 zwischen einer Ruhelage innerhalb des Maschinengestells 38, bei der die Fördermittel 51, 52 außerhalb eines Hubbereiches 62 der Platte 3 sind - wie in vollen Linien dargestellt - in eine Arbeitslage zwischen der angehobenen Platte 3 und dem Plattenstapel 39 - wie in strichlierten Linien dargestellt - wird z.B. durch einen Kettentrieb 62 mit einer umlaufenden Antriebskette 63 gebildet deren Kettenstränge parallel zu den aus dem Maschinengestell 38 ausragenden Führungsschienen 57 geführt sind. Mit einem Antriebsstrang 64 der Antriebskette 63 ist das Rollenlaufwerk 56, welches bei Verstellung der Fördermittel 51, 52 in die Arbeitslage in eine Endposition 65 verstellt wird, antriebsverbunden.

Ein Antriebsmotor 66 der Antriebsanordnung 61 ist hinsichtlich seiner Drehrichtung umsteuerbar ausgebildet, wodurch der erforderliche Wechsel in der Verstellrichtung zum Verstellen der Fördermittel 51, 52 zwischen der Ruhelage und der Arbeitslage bewerkstelligt wird.

Im dargestellten Ausführungsbeispiel sind die Fördermittel 51, 52 in der Arbeitslage in strichlierten Linien gezeigt, bei der diese mit den Förderrollen 67 zwischen der angehobenen Platte 3 und dem Plattenstapel 39 zur Aufnahme der Platte 3 und deren Weitertransport in die Druckmaschine 37 in Bereitstellung sind. Die Platte 3 wird mittels der Hebevorrichtung 2 auf die Fördermittel 51, 52 abgelegt und durch diese der Druckmaschine 37 zugeführt. Zur Aufnahme einer weiteren Platte 3 aus dem Plattenstapel 39 werden die Fördermittel 51, 52 mittels des Kettentriebes 62 in die in vollen Linien gezeigte Ruhelage innerhalb des Maschinengestells bewegt, wobei in den Führungsschienen 57 eine Umlenkung aus der zur Aufstandsfläche 40 parallelen Lage in eine dazu etwa senkrechte Lage erfolgt, wodurch sich eine sehr platzsparende Ausbildung für die Vereinzelungs- und Zuführvorrichtung 33 infolge einer geringen Tiefe 68 für das Maschinengestell 38 ergibt.

Es wird weiters darauf hingewiesen, dass anstelle der durch die Rollenbahnen 54 gebildeten Fördermittel 51, 52 selbstverständlich auch in Förderrichtung gemäß - Pfeil 50 - geteilte, hintereinander angeordnete und miteinander über die Schwenkachse 55 verbundene Bandförderer zum Einsatz gelangen können.

Weiters sei ebenfalls darauf hingewiesen, dass der Verstellantrieb 61 für die Verstellung der Fördermittel 51, 52 selbstverständlich auch in Art des für die Hebevorrichtung 2 beschriebenen Spindeltriebes 44 als Linearantrieb 69 ausgeführt sein kann. Umgekehrt ist es selbstverständlich auch möglich, den Antrieb 43 für die Hebevorrichtung 2 als Kettentrieb 62, wie für die Verstellung der Fördermittel 51, 52 beschrieben, auszuführen, oder einen anderen Linearantrieb, z.B. mit einem Druckmedium beaufschlagbaren Hydraulikzylinder, Pneumatikzylinder, zu verwenden.

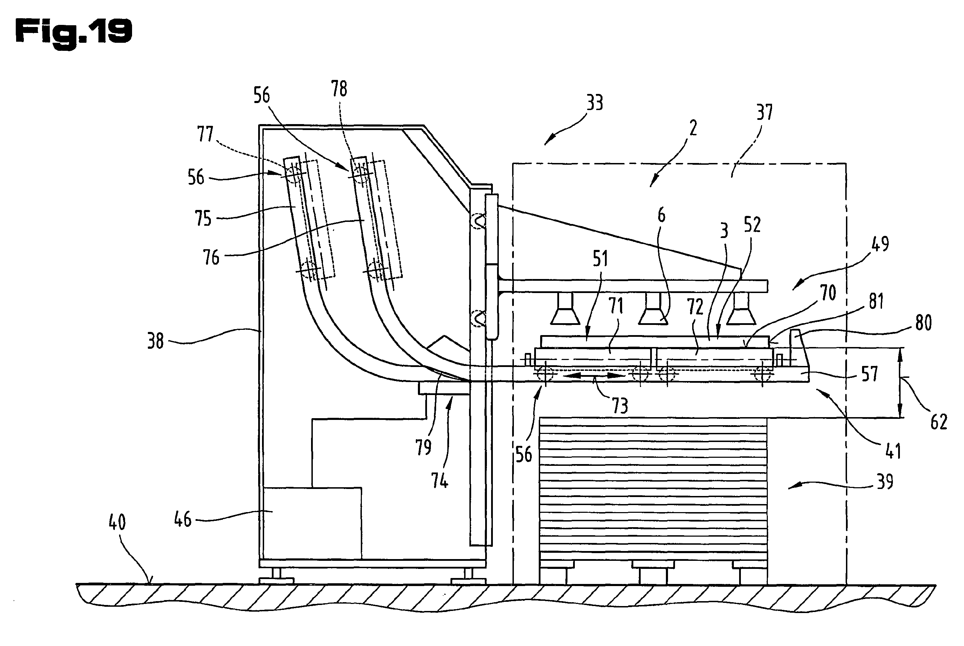

In der Fig. 19 ist eine weitere Ausführung der Vereinzelungs- und Zuführvorrichtung 33 für die Platte 3 von dem Plattenstapel 39 gezeigt. Auf die Ausbildung der dabei zum Einsatz gelangenden Hebevorrichtung 2 wird im Detail nicht mehr eingegangen, da diese entsprechend den bereits hervorgehend erläuterten Ausführungsbeispielen ausgebildet ist.

Im Detail wird auf eine weitere Möglichkeit der Ausbildung der Zuführvorrichtung 35 für die Beschickung der Druckmaschine 37 mit der Platte 3 eingegangen.

Aus dem Maschinengestell 38 ragen in zur Aufstandsfläche 40, eine parallele Förderebene 70 der Fördermittel 51, 52 in Arbeitslage, beispielsweise von Bandförderern 71, 72 ausbildend, Führungsschienen 57. In diesen sind die Fördermittel 51, 52 mittels der Rollenlaufwerke 56 verstellbar gelagert. Die Förderrichtung für die Platte 3 ist im gezeigten Ausführungsbeispiel in zur Verstellrichtung der Fördermittel 51, 52 in den Führungsschienen - gemäß Doppelpfeil 73 - senkrechter Richtung verlaufend.

Im Maschinengestell 38 verzweigen sich die Führungsschienen 57 über eine Steuerweiche 74 in zwei zueinander parallel verlaufende Schienenabschnitte 75, 76 zur Aufnahme je eines der Fördermittel 51, 52 in der in strichlierten Linien gezeigten Ruhelage, bei der diese außerhalb des Hubbereiches 62 innerhalb des Maschinengestells 38 geparkt sind.

Nach dem Anheben der Platte 3 vom Plattenstapel 39 werden die Fördermittel 51, 52 über in jeweils zumindest einem der Rollenlaufwerke 56 zugeordneten Fahrantrieb 77, 78 in aufeinanderfolge in die Arbeitslage zwischen der angehobenen Platte 3 und dem Plattenstapel 39 verfahren. Infolge wird mittels der Hebevorrichtung 2 die Platte auf die Bandförderer 71, 72 abgesenkt und von den Saugnäpfen 6 freigegeben und nach Start der Bandförderer 71, 72 der Druckmaschine 37 zugeführt.

Zur Aufnahme einer weiteren der Platten 3 aus dem Plattenstapel 39 werden nunmehr die Bandförderer 71, 72 wieder in Aufeinanderfolge in die Ruhelage innerhalb des Maschinengestells 38 verfahren, wobei die Steuerweiche 74, welche z.B. über ein elektromotorisch verstellbares und von der Steuereinrichtung 46 angesteuerte Weichenzunge 79 jedem der Fördermittel 51, 52 den entsprechenden Schienenabschnitt 75, 76 zuführt..

Ein weiteres Detail ist der Fig. 19 zu entnehmen mit einem im Endbereich der waagrecht verlaufenden Führungsschienen 57 vorgesehenen Anschlagmittel 80, das der Ausrichtung der Platte 3 mit einer Längskante 81 exakt parallel zur Förderrichtung bewirkt. Dazu werden die Fördermittel 51, 52, vor der Ablage der Platte 3 auf die Bandförderer 71, 72 in einer geringen Distanz vor dem Anschlagmittel 80 in einer Zwischenposition gestoppt. Nachdem die Platte 3 auf die Bandförderer 71, 72 abgelegt ist, wird durch kurzzeitige Betriebnahme der Fahrantriebe 77, 78 eine Weiterbewegung in Richtung des Anschlagmittels 80 durchgeführt, bis es zum Kontakt der Längskante 81 mit dem Anschlagmittel 80 kommt und damit die Platte 3 ausgerichtet wird bevor sie der Druckmaschine 37 zugeführt wird.

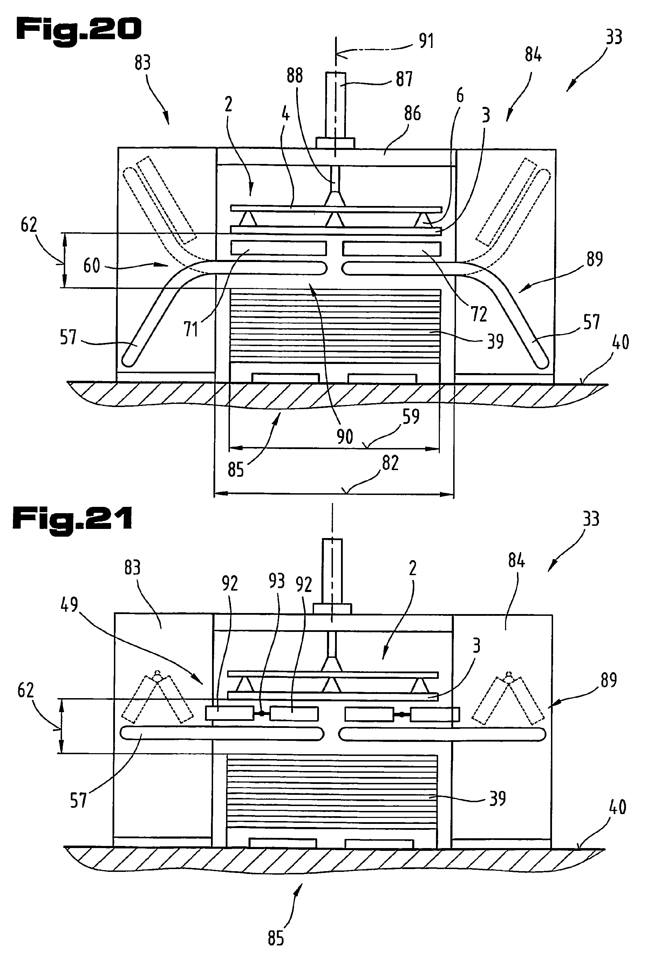

In der Fig. 20 ist eine weitere Ausführung der Vereinzelungs- und Zuführvorrichtung 33 gezeigt. Bei dieser Ausführung sind zwei in einem Abstand 82 zueinander angeordnete schrankartige Gehäuse 83, 84 vorgesehen zwischen denen ein Stellplatz 85 für den Plattenstapel 39 vorgesehen ist. Die Gehäuse 83, 84 sind zueinander positioniert und beispielsweise mit einem Deckrahmen 86 verbunden der auch die Hebevorrichtung 2 z. B. einen Pneumatikzylinder 87 mit Verstellrichtung einer Kolbenstange 88 senkrecht zur Aufstandsfläche 40 lagert. An der Kolbenstange 88 ist der Rahmen 4 befestigt der mit den Saugnäpfen 6 zum Abheben der Platte 3 vom Plattenstapel 39 bestückt ist.

Als Fördermittel 51, 52 sind im gezeigten Ausführungsbeispiel die Bandförderer 71, 72 vorgesehen die in den Führungsschienen 57, wie bereits in den vorhergehenden Figuren beschrieben, zwischen der Ruhelage außerhalb des Hubbereiches 62 der Platte 3 und der Arbeitslage zur Ablage der Platte 3 auf die Bandförderer 71, 72 und deren Transport verstellbar sind.

Die Bandförderer 71, 72 werden dabei in zur Förderrichtung der Platte 3 quer verlaufender Richtung verstellt wobei in jedem der gegenüber angeordneten Gehäuse 83, 84 jeweils eine eigene durch die Führungsschienen 57 gebildete Führungsanordnung 89 vorgesehen ist.

Die Führungsschienen 57 verlaufen in den Gehäusen 83, 84 geneigt zur Aufstandsfläche 40 wodurch eine platzsparende Anordnung möglich ist. Über die Bogenstücke 60 wird ein Übergang in einen zur Aufstandsfläche 40 parallelen Führungsbereich 90 der Führungsschienen 57 erzielt in dem diese in Richtung einer Mittelebene 91 aufeinander zuragen. Wie bereits zur Fig. 18 ausgeführt sind die Führungsschienen 57 selbstverständlich ebenfalls außerhalb des Hubbereiches 62 für die Platte 3, d.h. in dem Abstand 82 zueinander angeordnet der größer ist als die Breite 59 des Plattenstapels 39, wobei dies bei einer Querförderung der Platte 3 zutrifft. Selbstverständlich ist jedoch auch eine Auslegung für eine Längsförderung der Platte 3 bei entsprechender Vergrößerung des Abstandes 82 zwischen den Gehäusen 83, 84 möglich.

Wie der Abbildung in der Fig. 20 im Weiteren zu entnehmen - in strichlierten Linien dargestellt - ist der geneigte Verlauf der Führungsschienen 57 innerhalb der Gehäuse 83, 84 sowohl in Richtung der Aufstandsfläche 40 erstreckend wie auch in Richtung des Deckrahmens 86 möglich.

In der Fig. 21 ist eine weitere Ausbildung der Vereinzelungs- und Zuführvorrichtung 33 gezeigt die hinsichtlich der Ausbildung und Anordnung der Fördermittel 51, 52 gegenüber der zuvor beschriebenen Lösung variiert. Daher kann auf eine Detailbeschreibung der Anordnung der Gehäuse 83, 84 und der Hebevorrichtung 2 an dieser Stelle verzichtet werden.

Die Fördervorrichtung 49 für die Platte 3 wird dabei durch z.B. vier Gurtförderer 92 gebildet die jeweils paarweise parallel zueinander verlaufen und in die beidseits des Stellplatzes 85 des Plattenstapels 39 angeordneten Gehäusen 83, 84 quer zu der Förderrichtung verstellbar sind um den Hubbereich 62 für die Platte 3 frei zu geben.

Jeweils zwei der Gurtförderer 92 sind über eine in Förderrichtung zwischen diesen angeordnete Schwenkachse 93 miteinander schwenkbar verbunden und gemeinsam in der durch die Führungsschienen 57 gebildeten Führungsanordnung 89 zwischen der Arbeitslage und der Ruhelage verstellbar, wobei die Führungsschienen 57 in einer zur Aufstandsfläche 40 parallelen Ebene verlaufen.

Durch die Verbindung von jeweils zwei der Gurtförderer 92 mittels der Schwenkachsen 93 wird eine platzsparende Anlagenkonfiguration erreicht da in der Ruhelage, bei der sich die Gurtförderer 92 innerhalb der Gehäuse 83, 84 beiderseits des Stellplatzes 85 befinden bzw. verstellt sind, ein Zusammenklappen erfolgt, wie dies schematisch in strichlierten Linien gezeigt ist.

Diese Ausbildung ermöglicht des weiteren auch eine sehr einfach gestaltete Führungsanordnung 89 bzw. Führungsschienen 57.

Unterschiedliche Modifikationen des gezeigten Ausführungsbeispiels sind denkbar und möglich, ohne den Bereich der Erfindung zu verlassen. So wäre es beispielsweise denkbar und möglich, die Förderbahn als ganzes um eine seitlich des Transportweges für die Hebevorrichtung und in der Förderrichtung ausgerichtete Achse auf- oder abzuklappen. Eine aus mindestens zwei Teilbahnen bestehende, zusammenklappbare Ausbildung, wie diese im gezeigten Ausführungsbeispiel dargestellt ist, ist aber bevorzugt.

Der Ordnung halber sei abschließend darauf hingewiesen, dass zum besseren Verständnis des Aufbaus der erfindungsgemäßen Transporteinrichtung diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

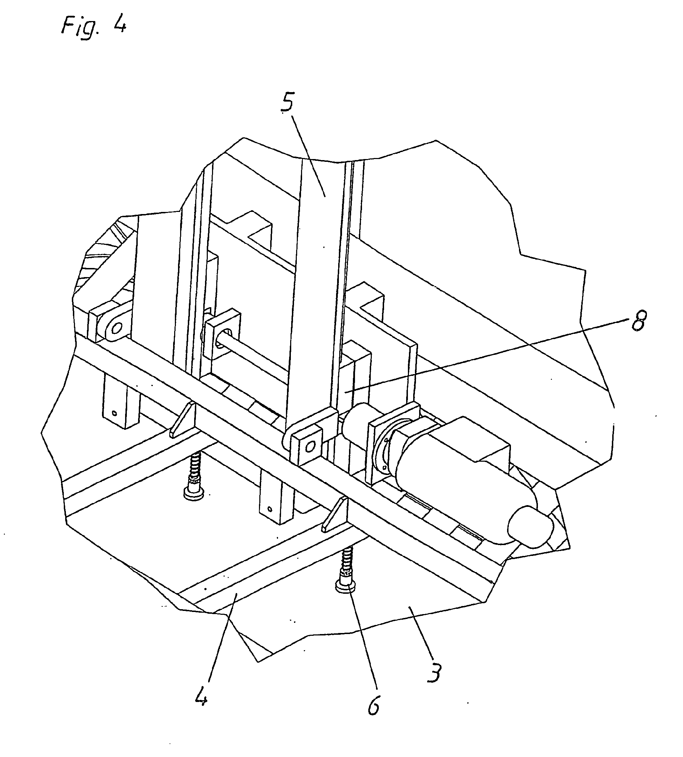

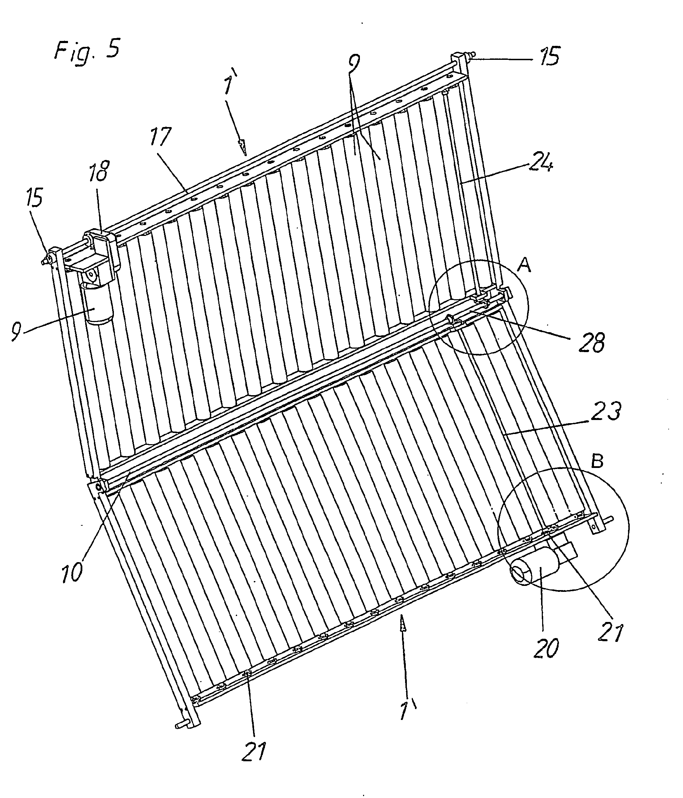

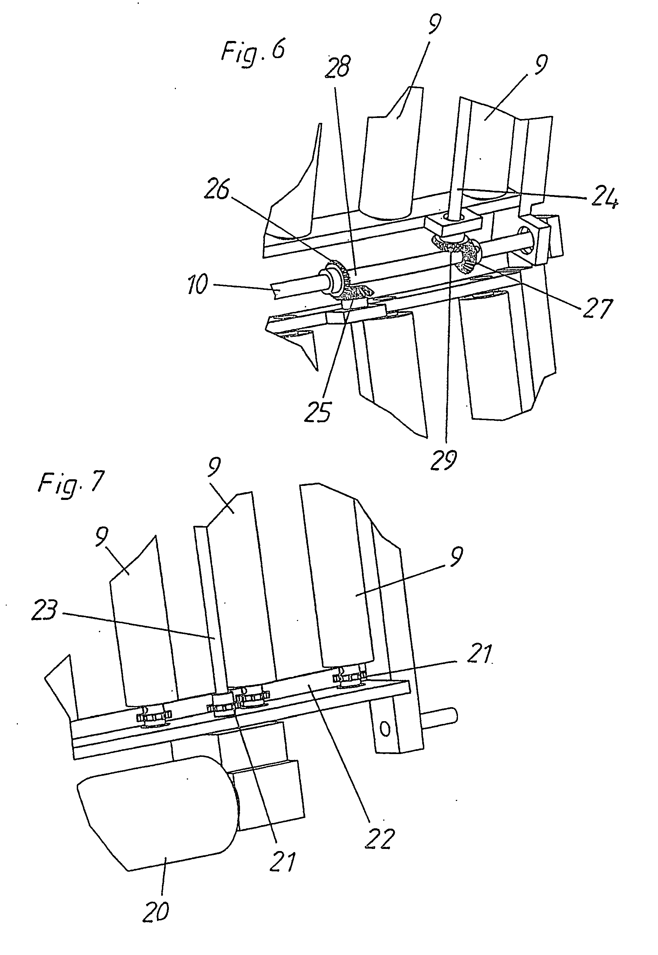

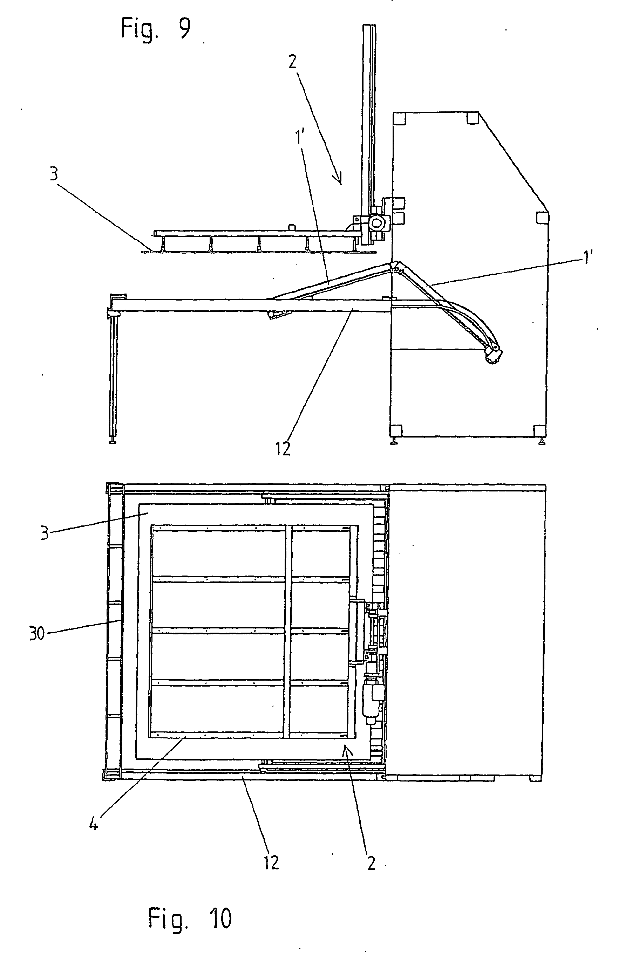

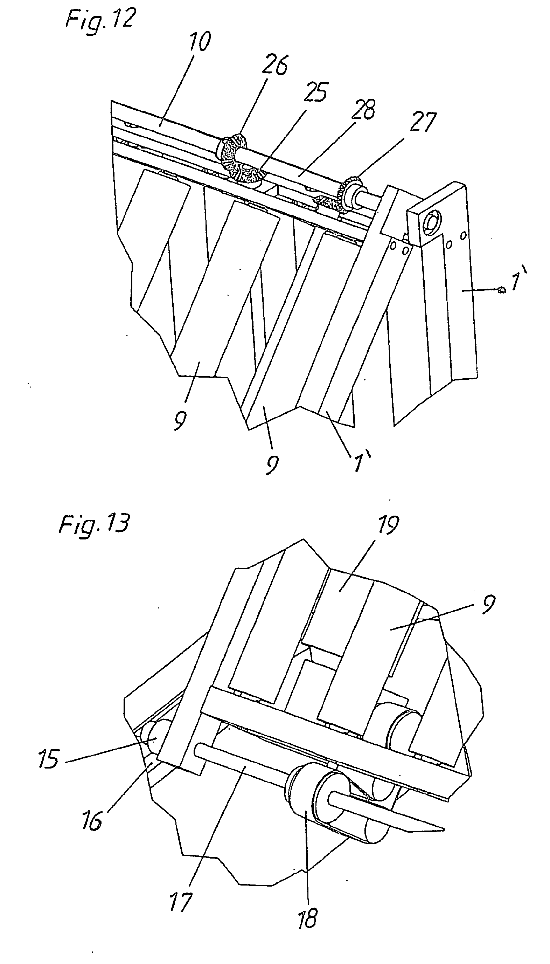

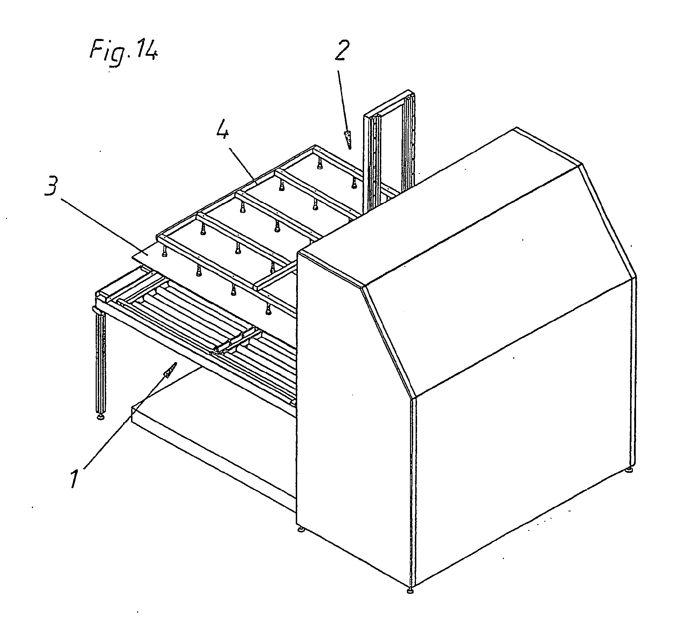

Vor allem können die einzelnen in den Fig. 1 bis 21 gezeigten Ausführungen den Gegenstand von eigenständigen, erfindungsgemäßen Lösungen bilden. Die diesbezüglichen erfindungsgemäßen Aufgaben und Lösungen sind den Detailbeschreibungen dieser Figuren zu entnehmen.

### Bezugszeichenaufstellung

- 1: Förderbahn
- 1': Teilbahn
- 2: Hebevorrichtung
- 3: Platte
- 4: Rahmen
- 5: Schiene

- 6: Saugnapf
- 7: Unterlage
- 8: Rührungsklotz
- 9: Rolle
- 10: Achse

- 11: Schiene
- 12: Abschnitt
- 13: Abschnitt
- 14: Zapfen
- 15: Ritzel

- 16: Zahnstangenprofil
- 17: Antriebswelle
- 18: Riemenantrieb
- 19: Motor
- 20: Motor

- 21: Zahnrad
- 22: Antriebslatte
- 23: Antriebswelle
- 24: Antriebswelle
- 25: Kegelzahnrad

- 26: Kegelzahnrad
- 27: Kegelzahnrad
- 28: Hülse
- 29: Kegelzahnrad
- 30: Anschlaglineal

- 31: Begrenzungsanschlag
- 32:
- 33: Vereinzelungs- und Zuführvorrichtung
- 34: Vereinzelungsvorrichtung
- 35: Zuführvorrichtung

- 36: Fertigungsvorrichtung
- 37: Druckmaschine
- 38: Maschinengestell
- 39: Plattenstapel
- 40: Aufstandsfläche

- 41: Führungsbahn
- 42: Hubschlitten
- 43: Antrieb
- 44: Spindeltrieb
- 45: Leitung

- 46: Steuereinrichtung
- 47: Rohrleitung
- 48: Pneumatiksteuerung
- 49: Fördervorrichtung
- 50: Pfeil

- 51: Fördermittel
- 52: Fördermittel
- 53: Einzelantrieb
- 54: Rollenbahnen
- 55: Schwenkachse

- 56: Rollenlaufwerk
- 57: Führungsschiene
- 58: Distanz
- 59: Breite
- 60: Bogenstück

- 61: Verstellantrieb
- 62: Kettentrieb Hubbereich
- 63: Kettentrieb
- 64: Antriebsstrang
- 65: Endposition

- 66: Antriebsmotor
- 67: Förderrolle
- 68: Tiefe
- 69: Linearantrieb
- 70: Förderebene

- 71: Bandförderer
- 72: Bandförderer
- 73: Doppelpfeil
- 74: Steuerweiche
- 75: Schienenabschnitt

- 76: Schienenabschnitt
- 77: Fahrantrieb
- 78: Fahrantrieb
- 79: Weichenzunge
- 80: Anschlagmittel

- 81: Längskante
- 82: Abstand
- 83: Gehäuse
- 84: Gehäuse
- 85: Stellplatz

- 86: Deckrahmen
- 87: Pneumatikzylinder
- 88: Kolbenstange
- 89: Führungsanordnung
- 90: Führungsbereich

- 91: Mittelebene
- 92: Gurtförderer
- 93: Schwenkachse

## Patentansprüche

1. Transporteinrichtung, insbesondere für plattenförmige Werkstücke (3), mit einer Hebevorrichtung (2) für den vertikalen Transport der Werkstücke und mit einer Förderbahn (1) mit Fördermitteln für den horizontalen Transport der Werkstücke, **dadurch gekennzeichnet, dass** die Förderbahn (1) klappbar ausgeführt ist, um den Transportweg für die Hebevorrichtung (2) freizugeben.

2. Transporteinrichtung nach Anspruch 1, **dadurch gekennzeichnet, dass** die Förderbahn (1) zwei um eine gemeinsame Achse (10) verschwenkbare Teilbahnen (1') aufweist.

3. Transporteinrichtung nach Anspruch 2, **dadurch gekennzeichnet, dass** die gemeinsame Achse (10) in Förderrichtung der Förderbahn (1) ausgerichtet ist.

4. Transporteinrichtung nach Anspruch 2 oder Anspruch 3, **dadurch gekennzeichnet, dass** zum Zusammenklappen der Förderbahn (1) die erste Teilbahn (1') mit ihrem von der zweiten Teilbahn (1') abgelegenen Seitenrand unter Anhebung der gemeinsamen Achse (10) in Richtung zum von der ersten Teilbahn abgelegenen Seitenrand der zweiten Teilbahn (1') hin verfahrbar ist.

5. Transporteinrichtung nach einem der Ansprüche 1 bis 4, **dadurch gekennzeichnet, dass** die Förderbahn (1) zusätzlich in flach ausgestreckter, vorzugsweise horizontal angeordneter, Stellung quer zur Förderrichtung verfahrbar ist.

6. Transporteinrichtung nach einem der Ansprüche 2 bis 5, **dadurch gekennzeichnet, dass** die Teilbahnen (1') über Rollen, Zapfen (14) od. dgl. in Schienen (11) geführt sind, die einen geraden Abschnitt (12) und einen gebogenen Abschnitt (13) aufweisen.

7. Transporteinrichtung nach einem der Ansprüche 1 bis 6, **dadurch gekennzeichnet, dass** die Fördermittel der Förderbahn (1) bzw. Teilbahnen (1') von Rollen (9) und/oder Förderbändern gebildet werden.

8. Transporteinrichtung nach einem der Ansprüche 1 bis 7, **dadurch gekennzeichnet, dass** in einem seitlichen Bereich der Förderbahn (1) ein Anschlag für die Werkstücke vorgesehen ist, der quer zu der Förderrichtung der Förderbahn (1) ausgerichtet ist.

9. Transporteinrichtung nach Anspruch 8, **dadurch gekennzeichnet, dass** der Anschlag von einem Anschlaglineal (30) gebildet wird.

10. Transporteinrichtung nach Anspruch 8 oder 9, **dadurch gekennzeichnet, dass** die Förderbahn (1) mit ihrem auf der Seite des Anschlags liegenden Seitenrand unter diesen hindurch quer zur Förderrichtung verfahrbar ist.

11. Transporteinrichtung nach einem der Ansprüche 1 bis 10, **dadurch gekennzeichnet, dass** an der Förderbahn (1) mindestens ein Motor (20) für den Antrieb der Fördermittel der Förderbahn (1) und mindestens ein weiterer Motor (19) zum Klappen der Förderbahn (1) gelagert ist.

12. Transporteinrichtung nach Anspruch 11, **dadurch gekennzeichnet, dass** der Motor (20) zum Antrieb der Fördermittel auf der einen der Teilbahnen (1') gelagert ist und zur Übertragung des Antriebes auf die Fördermittel der anderen Teilbahnen (1') eine Mittelwelle (28) vorgesehen ist, die in der gemeinsamen Schwenkachse (10) der beiden Teilbahnen (1') liegt.

13. Transporteinrichtung nach Anspruch 12, **dadurch gekennzeichnet, dass** der Antrieb der Antriebsmittel, beispielsweise der Rollen (9) einer Teilbahn (1'), über zwei Antriebswellen (23, 24) erfolgt, die jeweils auf einer der Teilbahnen (1') gelagert sind und über die Mittelwelle (28), die in der gemeinsamen Schwenkachse (10) der beiden Teilbahnen (1') liegt.

14. Transporteinrichtung nach Anspruch 13, **dadurch gekennzeichnet, dass** die beiden Antriebswellen (23, 24) und die Mittelwelle (28) mit Kegelzahnrädern (25, 26, 27, 29) versehen sind, die miteinander kämmen.

15. Transporteinrichtung nach Anspruch 6, **dadurch gekennzeichnet, dass** bei mindestens einer der Schienen (11) ein Zahnstangenprofil (16) vorgesehen ist, mit dem ein angetriebenes Ritzel (15), das auf einer der Teilbahnen (1') lagert, kämmt.

16. Transporteinrichtung nach Anspruch 15, **dadurch gekennzeichnet, dass** sich das Zahnstangenprofil (16) entlang des geraden Abschnittes (12) der Schiene (11) erstreckt.

17. Transporteinrichtung nach mindestens einem der Ansprüche 1 bis 16, **dadurch gekennzeichnet, dass** die Hebevorrichtung einen heb- uns absenkbaren Rahmen (4) umfasst, an dem Haltemittel für die Werkstücke gelagert sind.

18. Transporteinrichtung nach Anspruch 17, **dadurch gekennzeichnet, dass** die Haltemittel von Saugnäpfen (6) gebildet werden.

19. Transporteinrichtung mit einer Vereinzelungs- und Zuführeinrichtung (33) für plattenförmige Werkstücke in eine Fertigungseinrichtung (36), z.B. eine Druckmaschine (37) zum Bedrucken einer Platte (3) mit einer durch eine Hebevorrichtung (2) gebildeten Vereinzelungsvorrichtung (34) zum Anheben der Platte (3) von einem Plattenstapel (39) und mit einer Zuführvorrichtung (35) zum Transport der Platte (3) zur Fertigungseinrichtung (36) und Fördermittel (51, 52) der Zuführvorrichtung (35) in einem Maschinengestell (38) der Vereinzelungs- und Zuführvorrichtung (33) zwischen einer Arbeitslage zwischen der angehobenen Platte (3) und dem Plattenstapel (39) und einer Ruhelage außerhalb eines Hubbereiches (62) der Platte (3) verstellbar sind, **dadurch gekennzeichnet, dass** die Fördervorrichtung (49) bei der Verstellung aus der Arbeitslage in die Ruhelage aus einer zu einer Aufstandsfläche (40) parallelen in eine zur Aufstandsfläche (40) etwa senkrechten Lage umgelenkt wird.

20. Transporteinrichtung nach Anspruch 19, **dadurch gekennzeichnet, dass** die Fördervorrichtung (49) zwei in Förderrichtung parallel verlaufende Fördermittel (51, 52) aufweist.

21. Transporteinrichtung nach Anspruch 20, **dadurch gekennzeichnet, dass** Fördermittel (51, 52) durch zumindest einen Bandförderer (71, 72) oder Riemenförderer gebildet ist.

22. Transporteinrichtung nach Anspruch 20, **dadurch gekennzeichnet, dass** jedes der Fördermittel (51, 52) einen Verstellantrieb (61) aufweist.

23. Transporteinrichtung nach Anspruch 19, **dadurch gekennzeichnet, dass** die Fördervorrichtung (49) in einer zur Förderrichtung senkrecht verlaufenden Führungsbahn (41) verstellbar ist.

24. Transporteinrichtung nach Anspruch 19, **dadurch gekennzeichnet, dass** die Fördervorrichtung (49) in einer zur Förderrichtung parallel verlaufenden Führungsbahn (41) verstellbar ist.

25. Transporteinrichtung nach Anspruch 24, **dadurch gekennzeichnet, dass** die Führungsbahnen (41) durch parallel verlaufende, im Maschinengestell (38) angeordnete Führungsschienen (57) gebildet sind, die in zur Förderrichtung senkrecht verlaufenden Ebenen verlaufen.

26. Transporteinrichtung nach Anspruch 24, **dadurch gekennzeichnet, dass** die Führungsbahnen (41) durch parallel verlaufende, im Maschinengestell (38) angeordnete Führungsschienen (57) gebildet sind, die in zur Förderrichtung parallel verlaufenden Ebenen verlaufen.

27. Transporteinrichtung nach Anspruch 19, **dadurch gekennzeichnet, dass** eine durch die Fördermittel (51, 52) in Arbeitslage gebildete Förderebene (70) für die Platte (3) in Ruhelage in eine zur Aufstandsfläche (40) etwa senkrechte Lage verstellbar ist.

28. Transporteinrichtung nach einem der Ansprüche 24 bis 26, **dadurch gekennzeichnet, dass** die Führungsschienen (57) geradlinig verlaufen.

29. Transporteinrichtung nach einem der Ansprüche 24 bis 26, **dadurch gekennzeichnet, dass** die Führungsschienen (57) gekrümmt verlaufen.

30. Transporteinrichtung nach einem der Ansprüche 24 bis 26, **dadurch gekennzeichnet, dass** die Führungsschienen (57) kreisbogenförmig verlaufen.

31. Transporteinrichtung nach einem der Ansprüche 24 bis 26, **dadurch gekennzeichnet, dass** die Führungsschienen (57) teleskopartig ausgebildet sind.

32. Transporteinrichtung nach Anspruch 19, **dadurch gekennzeichnet, dass** die Fördermittel (51, 52) in den Führungsschienen (57) über Rollenlaufwerke (56) verstellbar gelagert sind.

33. Transporteinrichtung nach Anspruch 32, **dadurch gekennzeichnet, dass** das Fördemittel (51, 52) mit einem Verstellantrieb zur Verstellung zwischen der Arbeitslage und der Ruhelage antriebsverbunden ist.

34. Transporteinrichtung nach Anspruch 33, **dadurch gekennzeichnet, dass** der Verstellantrieb (61) durch zumindest einen mit einem Druckmedium beaufschlagbaren Druckzylinder gebildet ist.

35. Transporteinrichtung nach Anspruch 33, **dadurch gekennzeichnet, dass** der Verstellantrieb (61) durch einen elektromotorischen Antrieb gebildet ist.

36. Transporteinrichtung nach Anspruch 33, **dadurch gekennzeichnet, dass** der Verstellantrieb (61) durch einen Drehantrieb gebildet ist.

37. Transporteinrichtung nach Anspruch 33, **dadurch gekennzeichnet, dass** der Verstellantrieb (61) durch einen Linearantrieb, z.B. einen Kettentrieb (63), Spindeltrieb, Druckzylinder, etc. gebildet ist.

38. Transporteinrichtung nach Anspruch 19, **dadurch gekennzeichnet, dass** die Fördermittel (51, 52) in zur Förderrichtung senkrecht verlaufenden Richtung geteilt ausgebildet sind.

39. Transporteinrichtung nach Anspruch 19, **dadurch gekennzeichnet, dass** die Fördermittel (51, 52) in zur Förderrichtung parallel verlaufenden Richtung geteilt ausgebildet sind.

40. Transporteinrichtung nach Anspruch 19, **dadurch gekennzeichnet, dass** die Fördermittel (51, 52) in einer Teilungsebene über eine eine Schwenkachse (55) ausbildende Schwenkanordnung schwenkbar miteinander verbunden sind.

41. Transporteinrichtung nach Anspruch 19, **dadurch gekennzeichnet, dass** zumindest einem Fördermittel (51, 52) ein einen Begrenzungsanschlag für eine Längskante (81) der Platte (3) ausbildendes Anschlagmittel (80) in einer zur Förderrichtung parallel verlaufenden Richtung zugeordnet ist.

42. Transporteinrichtung nach Anspruch 41, **dadurch gekennzeichnet, dass** das Anschlagmittel (80) durch eine Anschlagschiene gebildet ist.

43. Transporteinrichtung nach Anspruch 19, **dadurch gekennzeichnet, dass** an einem Rahmen (4) der Hebevorrichtung (2) und/oder des Fördermittels (51, 52) zumindest eine Stellvorrichtung zur Ausrichtung der Platte (3) am Anschlagmittel (80) angeordnet ist.

44. Transporteinrichtung nach Anspruch 43, **dadurch gekennzeichnet, dass** die Stellvorrichtung durch zumindest eine angetriebene Förderwalze oder Förderrolle gebildet ist.

## Claims

1. Transport device, in particular for sheet-shaped workpieces (3), with a lifting mechanism (2) for transporting the workpieces vertically and a conveyor track (1) with conveyor means for transporting the workpieces horizontally, **characterised in that** the conveyor track (1) is of a foldable design in order to free up the transport path for the lifting mechanism (2).

2. Transport device as claimed in claim 1, **characterised in that** the conveyor track (1) has two part tracks (1') which are able to pivot about a common shaft (10).

3. Transport device as claimed in claim 2, **characterised in that** the common shaft (10) is oriented in the conveying direction of the conveyor track (1).

4. Transport device as claimed in claim 2 or claim 3, **characterised in that** in order to fold the conveyor track (1), the first part track (1') is folded by its lateral edge positioned remotely from the second part track (1') whilst lifting the common shaft (10) in the direction back towards the lateral edge of the second part track (1') positioned remotely from the first part track.

5. Transport device as claimed in one of claims 1 to 4, **characterised in that** the conveyor track (1) can additionally be moved transversely to the conveying direction in the flat, extended, preferably horizontal position.

6. Transport device as claimed in one of claims 2 to 5, **characterised in that** the part tracks (1') are guided by means of rollers, pins (14) or similar in tracks (11) which have a straight portion (12) and a bent portion (13).

7. Transport device as claimed in one of claims 1 to 6, **characterised in that** the conveyor means of the conveyor track (1) or part tracks (1') are provided in the form of rollers (9) and/or conveyor belts..

8. Transport device as claimed in one of claims 1 to 7, **characterised in that** a stop is provided for the workpieces in a lateral region of the conveyor track (1), oriented transversely to the conveying direction of the conveyor track (1).

9. Transport device as claimed in claim 8, **characterised in that** the stop is provided in the form of a stop rule (30).

10. Transport device as claimed in claim 8 or 9, **characterised in that** the conveyor track (1) is displaceable by its lateral edge lying on the side of the stop underneath the latter transversely to the conveying direction..

11. Transport device as claimed in one of claims 1 to 10, **characterised in that** at least one motor (20) is mounted on the conveyor track (1) for driving the conveyor means of the conveyor track (1) and at least one other motor (19) for folding the conveyor track (1).

12. Transport device as claimed in claim 11, **characterised in that** the motor (20) for driving the conveyor means is mounted on one of the part tracks (1') and a centre shaft (28) is provided as a means of transmitting the driving action to the conveyor means of the other part track (1') which lies in the common pivot shaft (10) of the two part tracks (1')..

13. Transport device as claimed in claim 12, **characterised in that** the drive means, for example the rollers (9), of a part track (1'), are driven by two drive shafts (23, 24) mounted respectively on one of the part tracks (1') and by means of the centre shaft (28) which lies in the common pivot shaft (10) of the two part tracks (1').

14. Transport device as claimed in claim 13, **characterised in that** the two drive shafts (23, 24) and the centre shaft (28) are provided with mutually meshing bevel gears (25, 26, 27, 29).

15. Transport device as claimed in claim 6, **characterised in that** at least one of the tracks (11) is provided with a rack section (16) with which a driven rack (15) mounted on one of the part tracks (1') meshes.

16. Transport device as claimed in claim 15, **characterised in that** the rack section (16) extends along the straight portion (12) of the track (11).

17. Transport device as claimed in at least one of claims 1 to 16, **characterised in that** the lifting mechanism has a frame (4) which can be raised and lowered, on which retaining means for the workpieces are mounted.

18. Transport device as claimed in claim 17, **characterised in that** the retaining means are provided in the form of suction cups (6).

19. Transport device with a separating and feed mechanism (33) for sheet-shaped workpieces in a production unit (36), e.g. a printing machine (37) for printing a sheet (3), with a separating device (34) in the form of a lifting mechanism (2) for lifting the sheet (3) from a sheet stack (39) and having a feed mechanism (35) for conveying the sheet (3) to the production unit (36) and conveyor means (51, 52) of the feed mechanism (35) are disposed in a machine frame so that they can be displaced in a machine frame (38) of the separating and feed mechanism (33) between a non-operating position outside of a lifting range (62) of the sheet (3) and an operating position between the raised sheet (3) and the sheet stack (39), **characterised in that** when the conveyor mechanism (49) is displaced from the operating position into the non-operating position, it is deflected from a position parallel with a support surface (40) into a position more or less perpendicular to the support surface (40).

20. Transport device as claimed in claim 19, **characterised in that** the conveyor mechanism (49) has two conveyor means (51, 52) extending parallel in the conveying direction.

21. Transport device as claimed in claim 20, **characterised in that** conveyor means (51, 52) are provided in the form of at least one belt conveyor (71, 72) or band conveyor.

22. Transport device as claimed in claim 20, **characterised in that** each of the conveyor means (51, 52) has a displacement drive (61).

23. Transport device as claimed in claim 19, **characterised in that** the conveyor mechanism (49) is displaceable in a guide track (41) extending perpendicular to the conveying direction.

24. Transport device as claimed in claim 19, **characterised in that** the conveyor mechanism (49) is displaceable in a guide track (41) extending parallel with the conveying direction.

25. Transport device as claimed in claim 24, **characterised in that** the guide tracks (41) are provided in the form of guide rails (57) extending parallel in the machine frame (38), which run in planes extending perpendicular to the conveying direction.

26. Transport device as claimed in claim 24, **characterised in that** the guide tracks (41) are provided in the form of guide rails (57) extending parallel in the machine frame (38), which run in planes extending parallel with the conveying direction.

27. Transport device as claimed in claim 19, **characterised in that** a conveyor plane (70) for the sheet (3) in the operating position formed by the conveyor means (51, 52) can be displaced into a position more or less perpendicular to the support surface (40) in the non-operating position.

28. Transport device as claimed in one of claims 24 to 26, **characterised in that** the guide rails (57) run in a straight line.

29. Transport device as claimed in one of claims 24 to 26, **characterised in that** the guide rails (57) extend in a curved arrangement.

30. Transport device as claimed in one of claims 24 to 26, **characterised in that** the guide rails (57) extend in an arcuate shape.

31. Transport device as claimed in one of claims 24 to 26, **characterised in that** the guide rails (57) are of a telescopic-type design.

32. Transport device as claimed in claim 19, **characterised in that** the conveyor means (51, 52) are mounted so as to be displaceable in the guide rails (57) by means of roller drives (56).

33. Transport device as claimed in claim 32, **characterised in that** the conveyor means (51, 52) is drivingly connected to a displacement drive to effect a displacement between the operating position and the non-operating position.

34. Transport device as claimed in claim 33, **characterised in that** the displacement drive (61) is provided in the form of at least one pressure cylinder which can be pressurised with a pressurising medium.

35. Transport device as claimed in claim 33, **characterised in that** the displacement drive (61) is provided in the form of an electric motor drive.

36. Transport device as claimed in claim 33, **characterised in that** the displacement drive (61) is provided in the form of a rotary drive.

37. Transport device as claimed in claim 33, **characterised in that** the displacement drive (61) is provided in the form of a linear drive, e.g. a chain drive (63), spindle drive, pressure cylinder, etc..

38. Transport device as claimed in claim 19, **characterised in that** the conveyor means (51, 52) are split in the direction extending perpendicular to the conveying direction.

39. Transport device as claimed in claim 19, **characterised in that** the conveyor means (51, 52) are split in the direction extending parallel with the conveying direction.

40. Transport device as claimed in claim 19, **characterised in that** the conveyor means (51, 52) are pivotably connected to one another in a dividing plane by means of a pivot system forming a pivot shaft (55).

41. Transport device as claimed in claim 19, **characterised in that** at least one conveyor means (51, 52) co-operates with a stop (80) constituting a restrictor stop for a longitudinal edge (81) of the sheet (3) in a direction extending parallel with the conveying direction.

42. Transport device as claimed in claim 41, **characterised in that** the stop means (80) is provided in the form of a stop rail.

43. Transport device as claimed in claim 19, **characterised in that** at least one positioning device for orienting the sheet (3) on the stop means (80) is disposed on a frame (4) of the lifting mechanism (2) and/or the conveyor means (51, 52).

44. Transport device as claimed in claim 43, **characterised in that** the positioning device is provided in the form of at least one driven conveyor cylinder or conveyor roller.

## Revendications

1. Dispositif de transport, en particulier pour des pièces à usiner (3) en forme de plaques, comportant un dispositif de levage (2) pour le transport vertical des pièces et une voie de transport (1) comprenant des moyens de transport pour le transport horizontal des pièces, **caractérisé en ce que** la voie de transport (1) est réalisée rabattable, afin de libérer le chemin de transport pour le dispositif de levage (2).

2. Dispositif de transport selon la revendication 1, **caractérisé en ce que** la voie de transport (1) présente deux voies partielles (1') pouvant basculer autour d'un axe (10) commun.

3. Dispositif de transport selon la revendication 2, **caractérisé en ce que** l'axe (10) commun est orienté dans le sens de transport de la voie de transport (1).

4. Dispositif de transport selon la revendication 2 ou la revendication 3, **caractérisé en ce que**, pour rabattre la voie de transport (1), la première voie partielle (1') peut être déplacée avec son bord latéral éloigné de la seconde voie partielle (1') en soulevant l'axe (10) commun en direction du bord latéral, éloigné de la première voie partielle, de la seconde voie partielle (1').

5. Dispositif de transport selon l'une quelconque des revendications 1 à 4, **caractérisé en ce que** la voie de transport (1) peut être déplacée en supplément dans une position étirée à plat, disposée de préférence horizontalement, transversalement au sens de transport

6. Dispositif de transport selon l'une quelconque des revendications 2 à 5, **caractérisé en ce que** les voies partielles (1') sont guidées au moyen de rouleaux, pivots (14) ou similaires dans des rails (11), qui présentent un tronçon (12) droit et un tronçon (13) incurvé.

7. Dispositif de transport selon l'une quelconque des revendications 1 à 6, **caractérisé en ce que** les moyens de transport de la voie de transport (1) resp. voies partielles (1') sont formées par des rouleaux (9) et/ou des bandes de transport.

8. Dispositif de transport selon l'une quelconque des revendications 1 à 7, **caractérisé en ce que** dans une zone latérale de la voie de transport (1) est prévue une butée pour les pièces, qui est orientée transversalement au sens de transport de la voie de transport (1).

9. Dispositif de transport selon la revendication 8, **caractérisé en ce que** la butée est formée par une règle de butée (30).

10. Dispositif de transport selon la revendication 8 ou 9, **caractérisé en ce que** la voie de transport (1) peut être déplacée avec son bord latéral situé sur le côté de la butée, sous celle-ci et transversalement au sens de transport.

11. Dispositif de transport selon l'une quelconque des revendications 1 à 10, **caractérisé en ce que** sur la voie de transport (1) sont fixées au moins un moteur (20) pour l'entraînement des moyens de transport de la voie de transport (1) et au moins un autre moteur (19) pour l'escamotage de la voie de transport (1).

12. Dispositif de transport selon la revendication 11, **caractérisé en ce que** le moteur (20) pour l'entraînement des moyens de transport est monté sur l'une des voies partielles (1') et, pour la transmission de l'entraînement aux moyens de transport des autres voies partielles (1'), il est prévu un arbre central (28) qui est disposé dans l'axe de pivotement (10) commun des deux voies partielles (1').

13. Dispositif de transport selon la revendication 12, **caractérisé en ce que** l'entraînement des moyens d'entraînement, par exemple des rouleaux (9) d'une voie partielle (1'), s'effectue au moyen de deux arbres d'entraînement (23, 24), qui sont montés respectivement sur l'une des voies partielles (1') et au moyen de l'arbre central (28), qui est situé dans l'axe de pivotement (10) commun des deux voies partielles (1').

14. Dispositif de transport selon la revendication 13, **caractérisé en ce que** les deux arbres d'entraînement (23, 24) et l'arbre central (28) sont dotés de roues dentées coniques (25, 26, 27, 29), qui s'engrènent entre elles.

15. Dispositif de transport selon la revendication 6, **caractérisé en ce que** sur au moins l'un des rails (11) est prévu un profil à crémaillère (16), avec lequel s'engrène un pignon (15) entraîné qui est monté sur l'une des voies partielles (1').

16. Dispositif de transport selon la revendication 15, **caractérisé en ce que** le profil à crémaillère (16) s'étend le long du tronçon (12) droit du rail (11).

17. Dispositif de transport selon au moins l'une quelconque des revendications 1 à 16, **caractérisé en ce que** le dispositif de levage comporte un cadre (4) pouvant être levé et abaissé, sur lequel sont montés des moyens de retenue pour les pièces à usiner.

18. Dispositif de transport selon la revendication 17, **caractérisé en ce que** les moyens de retenue sont formés par des ventouses (6).

19. Dispositif de transport comprenant un dispositif de séparation et d'alimentation (33) pour des pièces à usiner en forme de plaques dans un dispositif de production (36), par exemple une machine d'impression (37) pour l'impression d'une plaque (3) avec un dispositif de séparation (34) formé par un dispositif de levage (2) pour le soulèvement de la plaque (3) d'une pile de plaques (39) et avec un dispositif d'alimentation (35) pour le transport de la plaque (3) au dispositif de production (36) et des moyens de transport (51, 52) du dispositif d'alimentation (35) dans un bâti de machine (38) du dispositif de séparation et d'alimentation (33) qui peuvent être déplacés entre une position de travail entre la plaque (3) soulevée et la pile de plaques (39) et une position de repos à l'extérieur d'une zone de soulèvement (62) de la plaque (3), **caractérisé en ce que** le dispositif de transport (49) est dévié à partir d'une position parallèle à une surface de contact au sol (40) dans une position à peu près perpendiculaire à cette surface (40) en cas de déplacement de la position de travail dans la position de repos.

20. Dispositif de transport selon la revendication 19, **caractérisé en ce que** le dispositif de transport (49) comporte deux moyens de transport (51, 52) agencés parallèlement dans le sens de transport.

21. Dispositif de transport selon la revendication 20, **caractérisé en ce que** le moyen de transport (51, 52) est formé par au moins un transporteur à bande (71, 72) ou un transporteur à courroie.

22. Dispositif de transport selon la revendication 20, **caractérisé en ce que** chacun des moyens de transport (51, 52) comporte une commande de réglage (61).

23. Dispositif de transport selon la revendication 19, **caractérisé en ce que** le dispositif de transport (49) peut être positionné dans une voie de guidage (41) agencée perpendiculairement au sens de transport.

24. Dispositif de transport selon la revendication 19, **caractérisé en ce que** le dispositif de transport (49 peut être positionné dans une voie de guidage (41) agencée parallèlement au sens de transport.

25. Dispositif de transport selon la revendication 24, **caractérisé en ce que** les voies de guidage (41) sont formées par des rails de guidage (57) agencés en parallèle et disposés dans le bâti de machine (38), qui sont agencés dans des plans agencés parallèlement au sens de transport.

26. Dispositif de transport selon la revendication 24, **caractérisé en ce que** les voies de guidage (41) sont formées par des rails de guidage (57) agencés en parallèle et disposés dans le bâti de machine (38), qui sont agencés dans des plans agencés parallèlement au sens de transport.

27. Dispositif de transport selon la revendication 19, **caractérisé en ce qu'**un plan de transport (70) formé par les moyens de transport (51, 52) dans la position de travail pour la plaque (3) en position de repos peut être déplacé dans une position à peu près perpendiculaire à la surface de contact au sol (40).

28. Dispositif de transport selon l'une quelconque des revendications 24 à 26, **caractérisé en ce que** les rails de guidage (57) sont rectilignes.

29. Dispositif de transport selon l'une quelconque des revendications 24 à 26, **caractérisé en ce que** les rails de guidage (57) sont incurvés.

30. Dispositif de transport selon l'une quelconque des revendications 24 à 26, **caractérisé en ce que** les rails de guidage (57) ont une forme d'arc de cercle.

31. Dispositif de transport selon l'une quelconque des revendications 24 à 26, **caractérisé en ce que** les rails de guidage (57) sont réalisés de façon télescopique.

32. Dispositif de transport selon la revendication 19, **caractérisé en ce que** les moyens de transport (51; 52) sont montés réglables dans les rails de guidage (57) au moyen de mécanismes de roulement à rouleaux (56).

33. Dispositif de transport selon la revendication 32, **caractérisé en ce que** le moyen de transport (51, 52) est relié en entraînement à une commande de réglage pour le déplacement entre la position de travail et la position de repos.

34. Dispositif de transport selon la revendication 33, **caractérisé en ce que** la commande de réglage (61) est formée par au moins un vérin de pression pouvant être alimenté avec un agent sous pression.

35. Dispositif de transport selon la revendication 33, **caractérisé en ce que** la commande de réglage (61) est formée par une commande par moteur électrique.

36. Dispositif de transport selon la revendication 33, **caractérisé en ce que** la commande de réglage (61) est formée par une commande de rotation.

37. Dispositif de transport selon la revendication 33, **caractérisé en ce que** la commande de réglage (61) est formée par un actionneur linéaire, par exemple une commande par chaîne (63), une commande par broche, un vérin pneumatique. etc.

38. Dispositif de transport selon la revendication 19, **caractérisé en ce que** les moyens de transport (51, 52) sont réalisés séparément dans une direction perpendiculaire au sens de transport.

39. Dispositif de transport selon la revendication 19, **caractérisé en ce que** les moyens de transport (51, 52) sont réalisés séparément dans une direction parallèle au sens de transport.

40. Dispositif de transport selon la revendication 19, **caractérisé en ce que** les moyens de transport (51, 52) sont reliés entre eux de façon pivotante dans un plan de partage au moyen d'un agencement pivotant formant un axe de pivotement (55).

41. Dispositif de transport selon la revendication 19, **caractérisé en ce qu'**à au moins un moyen de transport (51, 52) est attribué un moyen de butée (80) formant une butée de limitation pour une arête longitudinale (81) de la plaque (3) dans une direction parallèle au sens de transport.

42. Dispositif de transport selon la revendication 41, **caractérisé en ce que** le moyen de butée (80) est formé par un rail de butée.

43. Dispositif de transport selon la revendication 19, **caractérisé en ce que** sur un cadre (4) du dispositif de levage (2) et/ou du moyen de transport (51, 52) est disposé au moins un dispositif de réglage pour l'orientation de la plaque (3) sur le moyen de butée (80).

44. Dispositif de transport selon la revendication 43, **caractérisé en ce que** le dispositif de réglage est formé par au moins un cylindre de transport ou rouleau de transport entraîné.
